# EUROPEAN PATENT SPECIFICATION

(11) **EP 2 643 249 B1**
(45) Date of publication and mention of the grant of the patent: **17.02.2021**
(21) Application number: 11793943.9
(22) Date of filing: 22.11.2011
(51) Int. Cl.: B65G 35/06, B65G 47/84, B23Q 7/14, B65B 35/38

(54) **Apparatus for conveying a carriage**
Vorrichtung zum Fördern eines Wagens
Appareil pour le transport d'un chariot

(30) Priority: 26.11.2010 GB 201020067
(43) Date of publication of application: 02.10.2013
(73) Proprietor: WestRock Packaging Systems, LLC, Norcross, GA 30071 (US)
(72) Inventor: BONNAIN, Jean-Christophe, F-36000 Chateauroux (FR)
(74) Representative: Rule, John Eric
(86) International application number: PCT/US2011/061977
(87) International publication number: WO 2012/134548

(56) References cited:
- EP-A1- 0 089 543
- EP-A1- 0 995 700
- EP-A1- 2 189 397
- EP-A2- 1 464 593
- EP-A2- 1 882 545
- EP-A2- 1 927 470
- DE-A1- 4 216 671
- DE-A1-102004 030 958
- DE-C1- 4 320 706
- DE-U1- 29 824 961
- US-A- 2 048 960
- US-A- 3 866 538
- US-A- 5 161 664
- US-A- 5 261 520
- US-A- 5 630 311
- US-A1- 2003 014 153

## Description

### FIELD OF THE INVENTION

The present invention relates generally to the field of apparatus and a method of altering a spacing between moveable carriages of that apparatus, and tools for use with such apparatus. More particularly, though not exclusively, the present invention relates to apparatus that comprises means to convey carriages, for manipulating articles, at two or more pitches and means to convey those carriages between a first portion of the apparatus in which they are conveyed at a first pitch and a second portion of the apparatus in which they are conveyed at a second pitch.

### BACKGROUND OF THE INVENTION

Within the packaging industry it is desirable that apparatus is used to automate the operation of manipulating and transferring articles between, for example, separate conveyors, or to manipulate articles disposed on a given conveyor to result in, for example, spaced groupings of articles thereupon. It is often advantageous that the apparatus is capable of working at two or more pitches, which is to say spacings between subsequent articles in a stream, so as to effect, for example, the aforementioned spacing of groups of articles, or alternatively, to allow for transfer of articles initially disposed in a stream having a first pitch onto a conveyor at a second pitch. It will be appreciated that a change in pitch requires alteration in speed of any carriages of the apparatus at least where the throughput of, for example, a first conveyor at a first pitch is desirously matched to the throughput of a second conveyor at a second pitch.

EP0089543 discloses a machine that comprises work stations arranged successively in a straight line and operated cyclically to which packaging containers are supplied by means of cells moved likewise in cyclical manner. At least one rotatably mounted drive roller (15) extending in the longitudinal direction of the machine (10) carries on its outer circumferential surface (150) an index groove (15") formed according to a predetermined control curve, or an index web (15'), in which guiding means constructed as index pins (180) and connected to the cells (18) engage.

DE4216671 discloses an apparatus for conveying a carriage according to the preamble of claim 1 that has at least one conveyor screw (12) with different thread pitches engaging in each other in order to transfer the different speeds to gripper devices. The screws are along linear regions of movement of the endless conveyors. A deflecting carousel can be provided for horizontally changing the direction of the gripper devices. After gripping the articles are accelerated for placing into crates.

### SUMMARY OF INVENTION

The present invention seeks to overcome or at least mitigate the problems of the prior art.

The problems of the prior art are overcome by an apparatus for conveying a carriage with the features of claim 1.

### BRIEF DESCRIPTION OF THE DRAWINGS

Exemplary embodiments of the invention will now be described with reference to the accompanying drawings, in which:
- FIGURE 1: illustrates a view of elements of an apparatus according to a first example not part of the present invention;
- FIGURE 2: illustrates the apparatus of Figure 1;
- FIGURE 3: illustrates a view of elements of an apparatus according to a second example not part of the present invention;
- FIGURE 4: illustrates an enlarged view of elements of the apparatus of Figure 3;
- FIGURE 5: illustrates a view of elements of an apparatus according to the present invention;
- FIGURE 6: illustrates the apparatus according to Figure 5;
- FIGURE 7: illustrates an elevation of a tool according to an unclaimed aspect of the present invention;
- FIGURE 8: illustrates an end view of the tool of Figure 7;
- FIGURE 9: illustrates an elevation of selected elements of the tool of Figure 7; and
- Figure 10: illustrates an elevation of selected elements of Figure 7.

### DETAILED DESCRIPTION OF PREFERRED EMBODIMENTS OF THE PRESENT INVENTION

Detailed descriptions of specific embodiments of the apparatus and method of operation thereof are disclosed herein. It will be understood that the disclosed embodiments are merely examples of the way in which certain aspects of the invention can be implemented and do not represent an exhaustive list of all of the ways the invention may be embodied. Indeed, it will be understood that the apparatus described herein may be embodied in various and alternative forms. The figures are not necessarily to scale and some features may be exaggerated, minimised or omitted to show details of particular components. Well-known components, materials or methods are not necessarily described in great detail in order to avoid obscuring the present disclosure. Any specific structural and functional details disclosed herein are not to be interpreted as limiting, but merely as a basis for the claims and as a representative basis for teaching one skilled in the art to variously employ the invention.

The present invention relates generally to an apparatus used in the packaging industry and, in particular, relates to the field of such apparatus that are operable to convey carriages at one of at least two different pitches, which is to say spacings between subsequent carriages in a stream. According to the invention the carriages are slidably engaged with a fixed track, and are driven by one of a number of different drive means as they complete circuits of this fixed track. These drive means are synchronised with one another so that there is handover of each given carriage as it passes from a terminal end of one conveying portion to the commensurate point of a subsequent conveying portion. Through control and configuration of these conveying portions, each carriage is accelerated or decelerated as required to effect a change in speed thereof, and therefore pitch between that carriage and its neighbours on the fixed track.

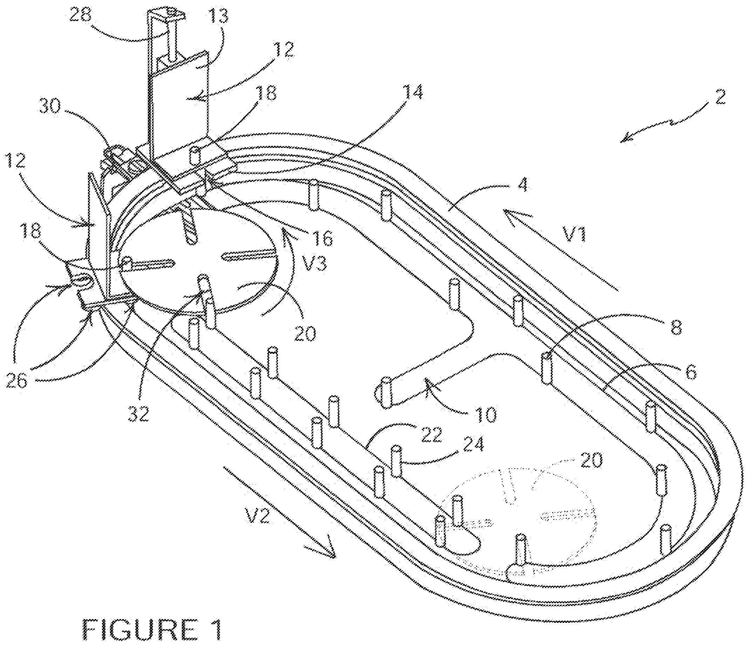

With reference to Figure 1, a first example of an apparatus 2 not part of the present invention provides a fixed track 4 about which carriages 12 (of which two exemplary carriages 12 are illustrated) are slidably engaged. The configuration and operation of these carriages 12 is described in greater detail below in association with this and other examples of the apparatus. The apparatus 2 further comprises a first 6 and a second 22 lug chain, the first lug chain 6 comprising a series of lugs 8 mounted thereupon, which lugs 8 protrude upwardly therefrom. Similarly the second lug chain 22 comprises a series of lugs 24 that also extend upwardly therefrom.

It is envisaged that the lug chains 6, 22 comprise a flexible chain such as a link chain, which chain comprises a series of engaging portions (not shown) to which a selection of the lugs 8, 24 may be securely engaged (and, optionally, either removably engaged or integrally formed) such that operation of a drive means (not shown) upon the lug chains 6, 22 drives those lugs 8, 24 around two separate respective predetermined paths. Due to a difference in the pitches between the lugs 8 of the first lug chain 6 and the lugs 24 of the second lug chain 22, it is necessary for the first lug chain 6 to have a longer path length than the second lug chain 22. In the illustrated example, an additional length of chain of the first lug chain 6 is provided by a protruding portion 10 of the path thereof, which extends approximately midway along a return portion of the path of the first lug chain 6, perpendicular thereto, towards the second lug chain 22 before returning to the return path. This additional portion 10 is a matter of design choice and is not essential if in an absence thereof it is possible to provide a suitably long first lug chain 6. In the illustrated example of Figure 1 no such additional portion is required for the second lug chain 22, though it is contemplated that where this would be beneficial to give the correct lug chain path length of the second lug chain 22, such an additional portion could be inserted.

The path of the first and second lug chains 6, 22 is preferably defined by a series of guides and sprockets about which the chains rotate or slide as required. A selection of sprockets may be employed on either or both sides of the lug chains 6, 22 to conform to any desired path shape that advantageously comprises at least an outward path portion that follows a portion of the fixed track 4 at a constant offset therefrom. In this manner, a carriage 12 that is slidably engaged with the fixed track 4 may engage with and be driven by, the lugs 8, 24 of that lug chain 6, 22, along the relevant portion of the fixed track 4. For this reason it is important that the aforementioned outward path of each lug chain 6, 22 maintains a constant offset from the fixed track 4. The return path of each lug chain 6, 22, may optionally return at a constant offset from the outward path thereof, or along a different path, as required.

The apparatus therefore provides a means by which a carriage 12 slidably disposed on the fixed track 4 may be conveyed along a first portion of that fixed track 4 by a first lug chain 6, and along a second portion of that fixed track by a second lug chain 22. Each lug chain 6, 22 is drivable by a drive means such as, amongst others, AC or DC electric motors, stepper motors or hydraulic motors. Preferably the two lug chains 6, 22 are driveable independently of one another and, more preferably, one of the two lug chains 6, 22, is driveable at a higher speed than the other lug chain 6, 22.

In order to effect a transfer, or handover, of a carriage 12 from the first lug chain 6 to the second lug chain 22, and vice versa, the apparatus 2 comprises transfer means. The transfer means are, themselves, conveyors of carriages, and are synchronised with the lug chains 6, 22 so as to effect engagement with the carriages 12 as they reach a terminal point of the relevant lug chain 6, 22. Once engaged with the carriage 12, the transfer means conveys that carriage 12 around the fixed track 4 to bring it into engagement with the other of the lug chains 6, 22.

In the first example, the transfer means are provided by first and second conveying wheels 20. The first conveying wheel 20 is disposed intermediate a terminal point on the first lug chain 6 and a commensurate point on the second lug chain 22. The second lug conveying wheel 20 is disposed intermediate a terminal point on the second lug chain 22 and a commensurate point on the first lug chain 6. Each conveying wheel 20 comprises a plurality of slots 32 defined in a peripheral edge thereof, which slots are provided to allow engagement with a protruding portion of each carriage 12 in the manner discussed below so as to convey that carriage out of engagement with the respective first 6 or second 22 lug chain and into engagement with the other of the respective first 6 or second 22 lug chain. In so doing, the conveying wheels 20 optionally provide for, where desirable, an acceleration or retardation of the carriages 12 so as to enable a synchronised handover from the first lug chain 6 to the first conveyor wheel 20 or from the second conveyor wheel 20 to the second lug chain 22.

Each conveyor wheel 20 is driven by a drive means (not shown) that may take the form of, amongst others, an AC or DC electric motor, a stepper motor or a hydraulic motor. The use of a servo motor is preferable so as to enable controllably the aforementioned acceleration or retardation of the carriages 12.

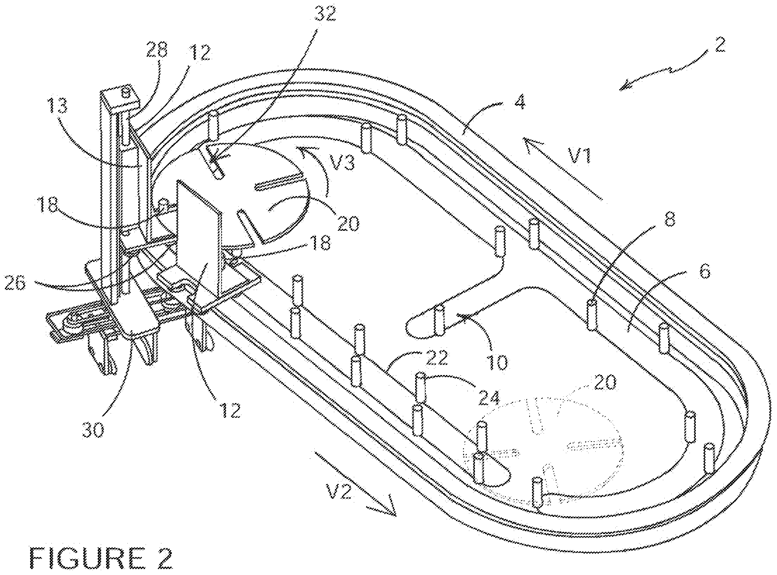

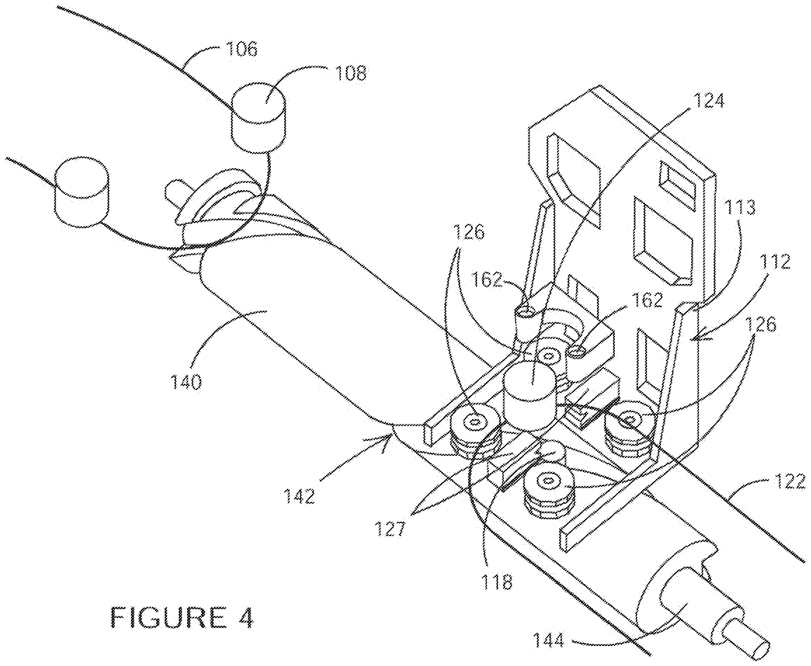

Each carriage 12, as shown in Figures 1 and 2, comprises a chassis 13 slidingly engaged with the fixed track. This chassis comprises a set of track following wheels 26 that are connected to a body o the chassis by spindles. Contact surface of the wheels 26 are engageable around peripheral edges of the fixed track 4 so as to allow sliding engagement between the chassis 13 and that fixed track 4. A portion of the body of the chassis 13 extends over a top surface of the fixed track 4 and provides a pin 18 that extends upwardly to provide for engagement between the carriage 12 and each of the conveying wheels 20 in the manner described below. A lower portion of the chassis 13 (shown most clearly in Figure 4, wherein an identical carriage is shown in relation to embodiment of the present invention) provides a lug engaging portion 16 which releasably receives a portion of a lug 8, 24 from a respective one of the first 6 and second 22 lug chains such that a driving force of that lug chain 6/22 may be imparted to the respective carriage 12 thereby to drive that carriage around a portion of the fixed track 4. This lug engaging recess may be an inwardly shaped recess having an internal abutting surface against which the lug 8, 24 comes into contact. It is envisaged that the carriages 12 themselves may serve a variety of roles in the wider system into which this apparatus 2 is employed, but in this first preferred embodiment each carriage comprises a head 30 (only one such a head 30 is illustrated, and is shown best in Figure 2) that is slidably mounted via a guide 28 to a surface of the chassis 13 facing outwardly from the circuit of the fixed track 4. These heads are operable to manipulate articles over which the carriage passes, such as, for example, to engage with a series of carton blank disposed on a conveyor and to left them off of that conveyor.

In operation, a carriage 12 is conveyed around a portion of the fixed track 4 through engagement with a lug 8 on the first lug chain 6. In the first example the first lug chain conveys this carriage 12 around a majority of the fixed track 4, and does so at a first speed V1. As the carriage 12 is so-conveyed, it nears a terminal end of that first lug chain 6, which terminal end corresponds to the point at which the path of the first lug chain diverges from a constant offset from the fixed track 4. When the carriage 12 reaches this terminal end of the first lug chain 6 the lug 8 by which it is conveyed bends away from the fixed track 4 and out of engagement with the receiving means 16 of the carriage 12. As this occurs, due to synchronisation and physical alignment between the conveying wheel 20 and the first lug chain 6, the pin 18 of that carriage 12 is received within one of the slits 32 of the first conveying wheel 20. Advantageously, one or both of the slit 32 and the lug receiving means 16 are sized so as to allow sufficient space for the lug 8 to successfully leave the lug receiving means 16 at the same moment or before the pin 18 is received within the slit 32 of the conveying wheel 20.

Once the pin 18 of the carriage 12 has been successfully received in the slit 32 of the first conveying wheel 20, the conveying wheel 20 then drives that carriage 12 around a subsequent portion of the fixed track 4 until the lug receiving means 16 of that carriage is able to receive a lug 24 from the second lug chain 22. The first conveying wheel 20 and the second lug chain 22 are synchronised and aligned to provide for a seamless transfer of the carriage 12 between the two. Again, the slit 32 and the lug receiving means 16 of the carriage 12 are sized such that reception of the lug 24 of the second lug chain 22 within the lug receiving means 16 may be effected at the same time or before the release of the pin 18 from the slit 32 of the conveying wheel 20.

Once the handover from the first conveying wheel 20 to the second lug chain 22 is complete, the carriage 12 is then freed to be conveyed by that second lug chain 22 along a further portion of the fixed track 4 until it is handed over to the second of the two conveying wheels 20.

The second conveying wheel 20 conveys the carriage to a position in which the lug receiving means 16 thereof may engage with a lug 8 from the first lug chain again.

Preferably, the second lug chain 22 is driven at a second speed V2, slower than the first speed V1. This means that the carriages 12 transferred onto the second lug chain 22 possess a smaller spacing (pitch) from one another than they previously possessed on the first lug chain 6. In one exemplary application, the apparatus is used to engage and transfer carton blanks in a single file stream at a given pitch onto an out feed conveyor as a dual lane stream of carton blanks at that same pitch. In this instance, the speed V2 of the second lug chain 22 is half that of the speed V1 of the first lug chain 6, and the heads 30 of the carriages 12 are operable to manipulate the carton blanks to engage and rotate them.

In operation, a larger number of carriage 12 than illustrated may be employed with the apparatus 2, each mounted with a head 30 for, for example, engaging with and erecting cartons on a conveyor belt. The second lug chain 22 speed V2 allows the carriages 12 to be slowed over a portion of the fixed track path at which the carton are within the working reach of those heads 30, and subsequently sped up by the first lug chain 6, travelling at first speed V1, as they are returned to an upstream point of the second lug chain 22.

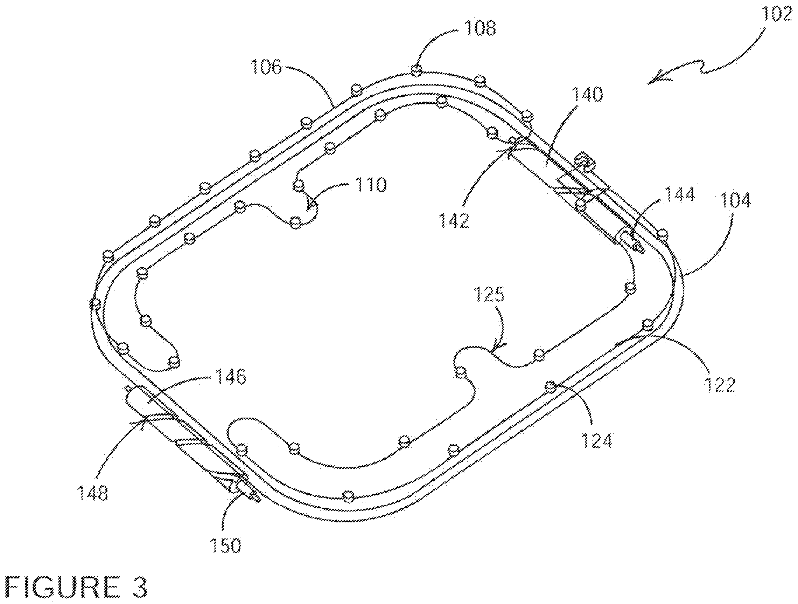

In a second example not part of the present invention an apparatus 102 is provided that is substantially similar to the first example of the apparatus 2. In the following description substantially only the differences between the two examples will be described in detail with reference to Figures 3 and 4. The apparatus 102 according to this second example has a number of features in common with the first example and similar reference numerals will be used for those similar features, the reference numerals for this second example being raised by "100" to denote this second example.

In the second example of the apparatus 102 the first and second conveying wheels 20 of the first example are replaced by first and second conveying screws 140, 146. These first and second conveying screws 140, 146 are rotated about an axis substantially parallel to the direction of travel of the carriages 12 (best shown in Figure 4). A thread 142, 148 cut respectively into the surfaces of the first and second screws 140, 146 slidably receives the pin 118 of the carriages 112 thereby to convey them along a portion of the fixed track 104 and into engagement with a lug 124 of the second lug chain 122.

Each screw 140, 146 pivots about a spindle 144, 150 and is driven to rotate about that spindle by a drive means (not shown). Such drive means may take the form of, amongst others, AC or DC electric motors, stepper motors or hydraulic motors. Preferably, the drive means is a stepper motor that is operable to control the rotational speed of the screw 140, 146 at any given moment. It is envisaged that each conveying screw 140, 146 may be driven by a separate drive means, or alternatively that both conveyor screws 140, 146 are driven by the same drive means.

As best shown in Figure 4 the carriages 112 of this second example preferably comprise a pin 118 that extends downwardly from a chassis 113 of that carriage 112 to locate slidably in the thread 142, 148 of the respective screw 140, 146. In addition, each carriage 112 comprises bearing rollers 126 or similar that engage rotatably around peripheral sides of the fixed track 104 to allow the carriage 112 to slidably engage with that fixed track 104.

The lug receiving means 116 of each carriage 112 optionally comprises preferably two rotating end pieces 162 that are freely rotatable to ease insertion of a lug 108, 124 into that lug receiving means 116. It is contemplated that the rotating end pieces 162 may optionally be resiliently biased so as to allow some degree of movement thereof to still further facilitate such insertion of a lug therein.

Lubricators 127 are further provided within a portion of the chassis 113 of the carriages 112, which lubricators 127 optionally comprise indents that accept protrusions extending from the peripheral edges of the track 104 thereby to provide a means of retaining that carriage 112 on the track 104 in addition to the presence of the bearing rollers 126.

By choice of the exact path of the thread 142, 148 across an exterior surface of each of the respective screws 140, 146 it is possible to effect a change in speed of the carriages 112 as they are conveyed along the length of the screws 140, 146. This is possible by altering an angle between that thread 142, 148 and a longitudinal axis (not shown) of the screws 140, 146. A larger angle (relative to the aforementioned axis in the direction of travel of the carriages 112) requires a larger number of rotations of the screw 140, 146, to convey the carriage the same distance along a length thereof, than a smaller angle between the thread and the longitudinal axis. By altering the angle of this thread it is therefore possible for the screws to provide for acceleration or retardation of the carriages 112 as they are conveyed along the length thereof so as to maintain synchronisation between the handover from a lug 108 of the first lug chain 106 and a lug 124 of the second lug chain 122. In this manner, precise control of the speed of the carriages is possible without precision motor control, as provisions of variations in the angle of the thread 142, 148 of the screw 140, 146 allows for alterations of speed of the carriages 112 even whilst the screw 140, 146 itself remains driven at a constant rotational velocity. This second preferred embodiment therefore advantageously provides for each carriage 112, once engaged with one or other of the conveying screws 140, 146, to follow an acceleration/deceleration curve independently of the other carriages engaged with that conveyor screw 140, 146 at that same time. This aids transfer of those carriages 12 so-engaged, to the subsequent lug chains 106, 122, because it aids removal of any step change in velocity between the carriages 112 and the aforementioned subsequent lug chain 106, 122.

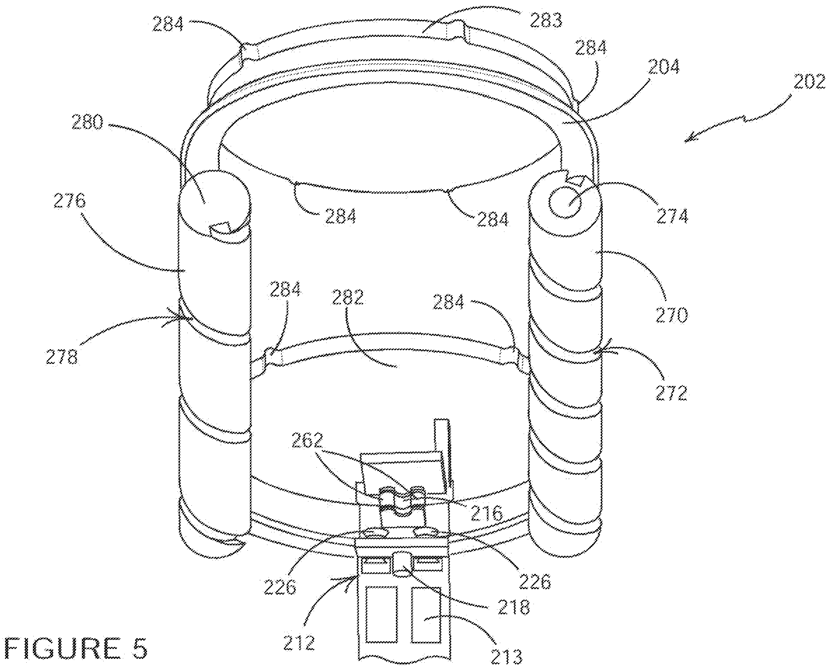

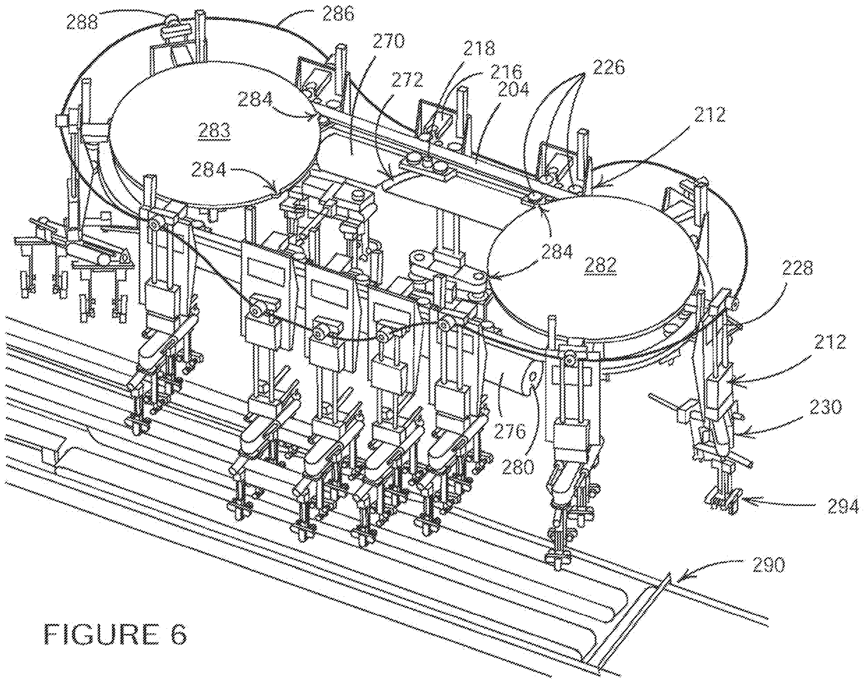

An apparatus according to the invention is contemplated and is described below with reference to Figures 5 and 6. This apparatus shares a number of features in common with the foregoing first and second examples not part of the current invention and only the differences between the examples and the apparatus according to the invention will be described. Like reference numerals are used to denote like features and those reference numerals relating to this apparatus are raised by "200" to denote this apparatus.

The apparatus 202 according to the present invention comprises two conveying wheels 282, 283 and two conveying screws 270, 276 in addition to the fixed track 204 about which carriages 212 are movable in sliding engagement.

The first and second conveying wheels 282, 283 are provided at each of semi-circular ends of the fixed track 204, and are each driven by a drive means such as, amongst others, an AC or DC electric motor, a stepper motor or a hydraulic motor. In an alternative not part of the present invention, the first and second conveyor wheels 282, 283 comprise separate drive means such that they are controllable independently of one another but it is contemplated that they are both driven by the same drive means.

Peripheral edges of each of the first and second conveyor wheels 282, 283 comprise a plurality of protrusions 284 defined therein. These protrusions extend sufficiently far outwardly from those peripheral edges to allow receipt thereof in receiving means 216 of the carriages 212. The first and second conveyor wheels 282, 283 thereby are operable to drive one or more carriages 212 around the semi-circular portions of the fixed track 204.

Between the semi-circular portions of the fixed track 204 extend linear portions of the fixed track 204 and these linear portions are aligned over the two screws 270, 276. The carriages 212 comprise a downwardly extending pin 218 for engaging with the conveying screws 270, 276. The screws 270, 276 are operable to convey the carriages 212 along the linear portions of the fixed track 204 through rotation about spindles 274, 280 passing through their longitudinal axes (not shown).

In operation, rotation of the screws 270, 276, in synchronisation with the conveying wheels 282, 283, allows synchronised handover of carriages between the protrusions 284 of the conveyor wheels 282, 283 and the threads 272, 278 of the screws 270, 276. According to the invention, a single drive means that is mechanically linked to both of the conveying wheels 282, 283 and the screws 270, 276 is employed so as to aid this synchronisation. This is achievable, for example, through provision of a mechanical gearing arrangement between the drive means and each of the conveying wheels 282, 283 and the screws 270, 276. In this manner, the mechanical gearing ensures synchronisation. It is envisaged that a single drive means may be provided that acts upon a drive shaft extending between distal ends of the apparatus. At each end, gearing may be provided such as a worm gear and follower, or complementary bevel gears, to drive upwardly extending shafts from the drive shaft. These upwardly extending shafts terminate in drive wheels or cogs that drive complementary wheels or cogs extending from a spindle upon which the respective conveying wheel is mounted. In additional, belts extend from the drive shaft to drive the conveying screws.

In an alternative not part of the present invention, it is envisaged that two or more separate drive means may be employed, which drive means are controlled so as to provide this synchronisation.

As is best shown in Figure 6, wherein an apparatus 202 according to the present invention is shown in a commercial application, the fixed track 204 is disposed beside a conveyor 290 which conveyor is operable to convey articles such as, amongst others, bottles, cans or cartons.

Each carriage 212 is provided with a head 230 that is slidably mounted with the guides 228 of the carriages 212 and from which depend carriage arms 294 that are operable to grip or otherwise engage with one or more articles from the conveyor 290, thereby to effect some form of manipulation thereof. A reciprocal movement of the heads 230 toward the conveyor 290 is effected through provision of an actuator, which actuator may comprise, amongst others, a cam follower 288 at an upper portion of the guide 228 and a corresponding cam path 286 vertically aligned over the fixed track 204, or a controllable AC, DC or stepper motor or hydraulic/pneumatic pistons.

Where a cam path 286 and cam follower 288 arrangement is used, the cam path 286 describes a lower portion over the conveyor 290 so as to affect a downward motion of the heads 230 as the carriages 212 come into vertical alignment over that conveyor 290. This downward motion provides, for example, for the selection of a blank disposed on the conveyor 290 by the carriage arms 294, for subsequent manipulation. By choice of the pitch of the carriages 212 as they are conveyed by the threads 276 over this conveyor belt 290 it is possible to choose the spacing at which the articles, such as the blanks on the conveyor belt 290 may be manipulated or selected. Once the carriages 212 have passed from a terminal end of the screw 276 to the conveyor wheel 283, the pitch thereof changes as a result of a change of velocity such that the pitch of the carriages 212 as they pass along the other of the two screws 270 is altered if required, thereby allowing the carriages 230 to manipulate, for example, a second stream of carton blanks or of articles (not shown) at a different spacing to those on the conveyor 290.

A second conveyor (not shown) is disposed alongside another side of the apparatus 202 which second conveyor may provide, for example, the aforementioned second stream of carton blank or of articles. In this instance it is envisaged that the carriage may be operable to descend into engagement with these cartons blanks or articles, whilst they are conveyed by one of the first or second lug conveyor screws, and to transfer those carton blanks or articles, so-engaged, onto one or more articles on the first conveyor as they are conveyed by the other of the first or second conveyor screws. Alternatively, the apparatus may be employed to engaged carton blanks or other articles from one of the conveyors and to deposit them on the other of the conveyors at a different pitch.

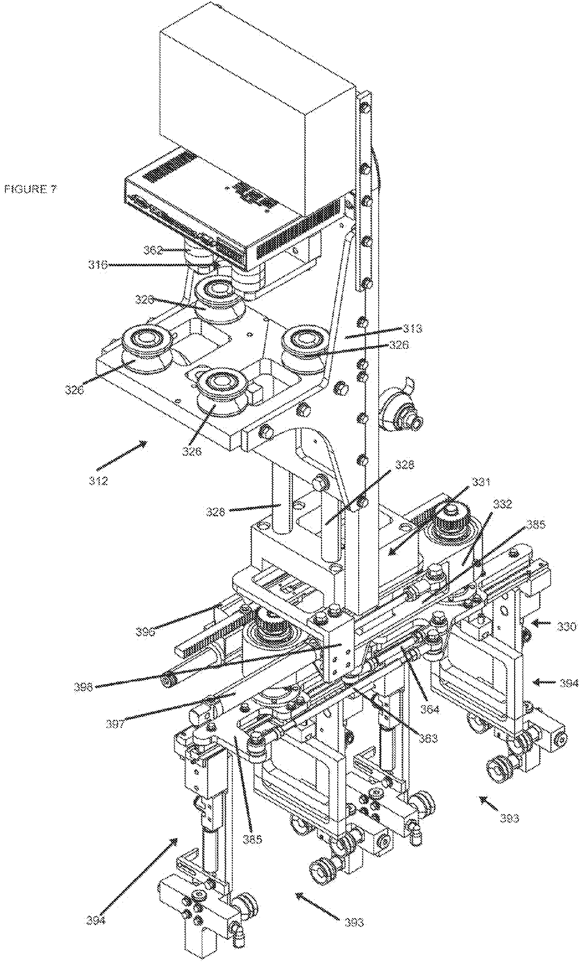

Greater detail of the carriages and heads referred to above is shown in Figures 7 to 11. For ease of reference, the reference numerals are prefixed with a "3" to denote this detailed view of the carriages 312 and heads 330, with like numbering of features previous introduced above with the prefix. Collectively, the carriages 312 and heads 330 are referred to as tools. The carriages 313 are each formed of a chassis that is engageable with a fixed track such as that described above, the chassis 313 providing a complementary shape for fixing on or around that fixed track, and for being slidably engaged therewith via provision of means such as, for example, roller bearings 326 and/or lubricators amongst others.

The chassis 313 is slidably connected to a head 330 via dual guides 328, which guides each take the form a shaft secured at one end to the head 330 and slidably received along the length thereof by the chassis 313. The head 330 comprises a mount 331, at which mount 331 the ends of the guides 328 are secured and from which the guides 328 extend upwardly to pass through bores in the chassis 313 and terminate in a cam follower described below.

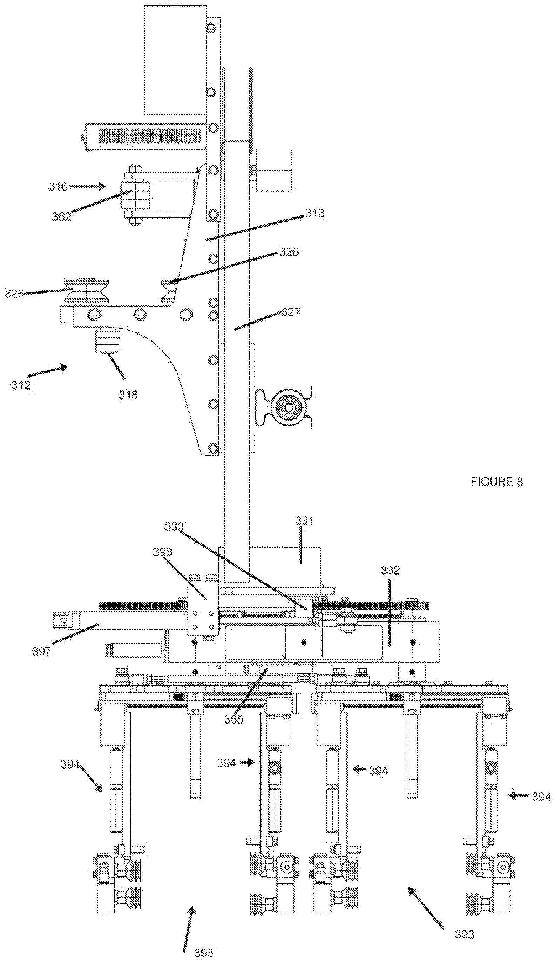

A shaft 333 (shown best in Figure 8) extends from the mount 331 substantially through the centre of the cross member 332, thereby to act as a pivot to allow rotation of the cross member 332 relative to the longitudinal axis of the shaft 333. At each end of the cross member 332, a gripping arrangement 393 is pivotally secured. Rotation of the cross member 332 is preferably affected by a drive means 397 such as an AC or DC motor, stepper motor or hydraulic/pneumatic motor or pistons such that controlled rotation of the cross member may be effected independently of the motion of the tool around the fixed track. Preferably, an air piston is provided as the drive means, extending between the mount 331 and the cross member 332. This air piston is operable to extend and retract, thereby causing a resultant rotation of the cross member 332. The air piston is preferably connected to the mount 331 via a connecting element 398, about which it can pivot, and pivotally connected at an end thereof, to the cross member 332.

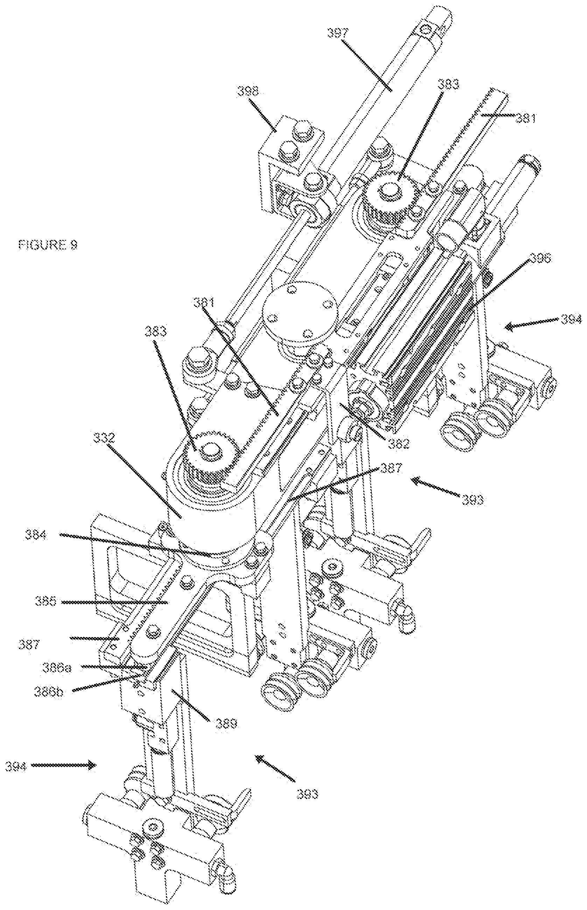

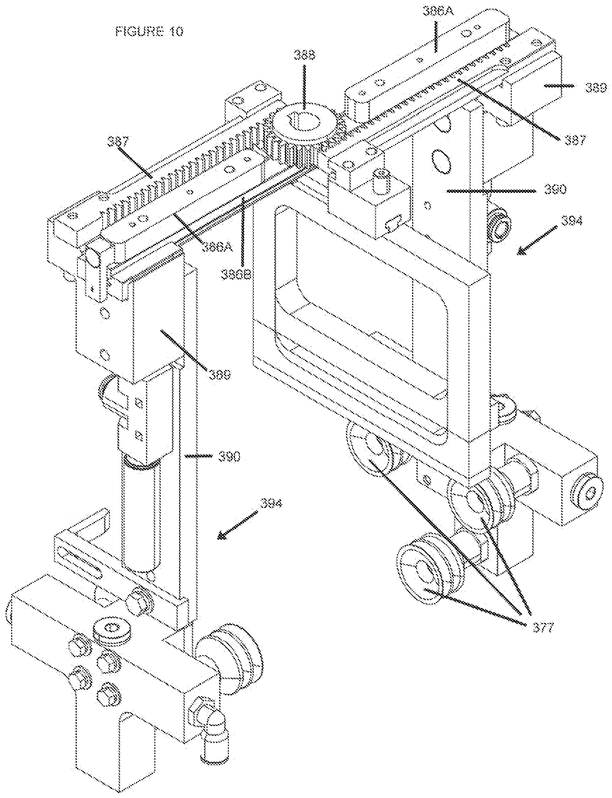

Each gripping arrangement 393 (shown best in Figure 10) comprises a top member 386a, 386b and opposed pairs of gripper arms 394. Upper portions 389 of each gripper arm 394 pair are slidably mounted to the top member 386b, and a drive means 396 (best shown in Figure 9) is provided to cause those upper portions of the gripper arms to slide along that top member. Each gripper arm 394 preferably comprises a rack 387 that extends along one of opposing sides of the top member 386a,386b, such that the racks 387 face one another. Interposed between these two racks 387, preferably substantially central of the top member 386a, 386b, is provided a lower cog 388 that meshes with both racks 387 simultaneously and therefore effects, through rotation thereof, reciprocal linear motion of the gripper arms 394 toward and away from one another. Preferably, this lower cog 388 is mechanically linked to an upper cog 383 (best shown in Figure 9) provided on the cross member 332 via a shaft 384 passing through a bore in the cross member 332. Upper cog 383 is engaged by a rack 381 that is mechanically linked to the drive means 396 via a connecting element 382. Preferably, the drive means 396 is a linear servo drive. This linear servo is operable to translate the rack 381 relative to the upper cog 383, thereby to affect a turning force on the upper 383 and hence lower cogs 388, and thereby to reciprocally move the gripper arms 394. A lower portion 386b of the top member (best shown from an end wise direction in Figure 9) comprises a shaped outer profile that provides a runner along which a complementarily shaped inner surface of the upper portion 389 of each gripper arm 394 may slide in response to turning of the lower cog 388. The back surfaces of the racks 387 of each gripper arm 394 are optionally shaped to provide a runner that slide through a channel extending therearound that is fixed to central portions of the top member 386a,386b.

Upper portions 386a of the top member are provided to connect the gripping arrangement 393 to a mount 385 through which the shaft between the upper 383 and lower 388 cogs passes. This mount 385 is therefore free to rotate and allows the gripping arrangement to rotate about that shaft 385 also. Control of this rotation of each gripping arrangement 393 relative to the cross member 332 is made possible by a first brace 363 provided between the mounts 385 connected to the top members 386a,386b of the two gripping arrangements 393, with a second brace 364 extending between one of the mounts 385 and an arm 365 (shown best in Figure 8) fixed to a lower portion of a shaft 333 about which the cross member 332 pivots relative to the chassis 313. In this manner, rotations of the cross member 332 cause a rotation of the gripping arrangements 393 relative to the cross member 332,via the second brace 364, whilst the first brace 363 causes rotation of the other gripping arrangement 393. This ensures that longitudinal axes of the top members 386b of each gripping arrangement 393 are parallel to one another.

Reciprocal movement of the cross members toward and away from the chassis (for example, in a vertical direction) is provided for by, preferably, a cam follower mounted at a distal end of a shaft about which the cross-member pivots relative to the chassis. This cam follower may follow a cam path, which path rises and falls relative to the chassis 313 to effect consequent raising and lowering of the cross member 332. Preferably, a resilient electrical connection between the chassis 313 and the head 330 is provided to conduct power to the drive mean 396, 397 of the head 330. This connection is preferably a flexible power cable that extends along a guide 328 to the head 330 and which is long enough to permit full range of motion of the head 330 relative to the chassis 313.

It is envisaged that the various drive means provided on board the tool be controllable either wirelessly via a suitable wireless data receiver, or that the tools be in electrical communication with either a central control hub or with one another in a daisy chained arrangement. Where a central hub is used the connection can be a simple cable having sufficient band width and/or data channels to supply control information to each drive means. Each drive means simultaneously or sequentially links to a rotatable central hub that is operable to rotate to avoid fouling of the or each control line by any other control lines where present.

Alternatively, where the tools are to be daisy chained to one another a cable guide is advantageously provided to keep the control lines free of fouling the operation of the tools themselves and to allow for where necessary alterations in the pitch between adjacent tools without causing undue stress upon the control lines.

The tool provides a manner in which a dynamic gripping and manipulation operations may be carried out, which operations may be altered in response to changes in geometry or placement of articles with which the tool is to brought into contact. For example, it is contemplated that the tool might be used for at least partial erection of a carton from a carton blank, which operation may advantageously be dynamically altered to effect partial erection of different carton blank geometries or sizes as required.

The chassis 313 of the tool comprises one or both of a receiving means 316 and a protrusion 318 such that the tool may be engaged by means of either or both of a pin extending from a conveying means such as, for example, a lug chain or conveyor belt or similar, or by reception of the protrusion 318 in a conveyor means such as, for example, a conveying wheel comprising slits that can accept the protrusion in this manner. Thus, the tool is be compatible with an apparatus such as that described above, wherein conveyance of the tool about a fixed track is passed from one conveying element to the next such that there is substantially simultaneous handover between adjacent conveying means to avoid interruption of the driving force enacted upon the tool as it moves.

Whilst in the above embodiment, both gripping arrangements 393 are driven by a first common drive means 396 in relation to reciprocal movement of the gripper arms 394, and a second common drive means 397 in respect of rotation of the gripping arrangements about the end of the cross-member 332 (via first and second braces 363, 364), in an alternative arrangement, it is contemplated that each gripping arrangement 393 may be driven independently of the other. For example, rotation of the gripping arrangements 393 relative to the cross member 332 may be effected through provision of an independent drive means for each gripping arrangement 393 such as, amongst others, an AC or DC motor, stepper motor or hydraulic or pneumatic motor or piston, to replace the first and second braces 363, 364 described above.

It is further contemplated that the number and placement of the drive means of the tool be altered to suit the functionality required of the tool, for example greater or fewer drive means to be provided for rotation of the gripper arms of the tool, and more drive means may be provided to allow rotation of the gripping arrangements independently of one another. In addition it may be desired that an additional drive means be provided to control upward and downward sliding movement of the head 330 relative to the chassis 316, instead of the cam follower/cam path, in which case a suitable drive means such as an AC or DC motor, stepper motor or hydraulic/pneumatic motor or piston be provide for such controllable operations.

Further variations that are considered comprise alternative articulations of the heads 330 such that in addition to reciprocal movement of the gripping arms 394 relative to one another, there may be for example rotational movement of those arms about a horizontal axis to provide for an alternative carton erection process that requires unfolding or folding of panels about horizontal axes.

The gripping arms 394 themselves preferably terminate in some form of securement means such as, for example, suction heads, mechanical gripping elements or inflatable balloons, that between them create a friction fit or similar although it is envisaged that tools according to this aspect of the invention may be provided that incorporate different securement means as necessary, or indeed that do not provide a securement means where none is required. In the illustrated embodiment of the gripping arrangements 393 each gripper arm 394 terminates in three suction heads 377 for securing the gripper arm 394 to a surface using negative pressure.

The foregoing description contemplates a number of preferable embodiments of apparatus and method of operation according to aspects of the invention. It is to be understood that the features of each of these embodiments is not to be considered in isolation of the features of the other embodiments, and it is envisaged that the features of the various embodiments may be combined in combinations not expressly discussed above, without falling outside of the scope of the invention as defined by the claims.

It will be recognised that as used herein, directional references such as "top", "bottom", "front", "back", "end", "side", "inner", "outer", "upper" and "lower" do not limit the respective features of the apparatus to such orientation, but merely serve to distinguish these features from one another.

## Claims

1. An apparatus (202) for conveying a carriage (212) around a fixed path (204), which apparatus (202) comprises:
a fixed track (204) in the form of a circuit comprising: second and fourth substantially linear portions of the fixed track (204) extending between first and third substantially semi-circular end portions of the fixed track (204);
first and second transfer means (282, 283) at said first and third semi-circular end portions of the fixed track (204);
first and second conveying screws (276, 270), said second and fourth linear portions of the fixed track being aligned over the first and second conveying screws (270, 276);
a first conveyor disposed beside said fixed track (204); and
a second conveyor (290) disposed alongside another side of the apparatus (202);
a carriage (212) moveably engaged in a sliding engagement with the fixed track (204), the carriage (212) comprising:
(i) a receiving means (216);
(ii) a protrusion (218);
(iii) guides (228);
(iv) a head (230) that is slidably mounted with the guides (228);
(v) an actuator which provides for reciprocal movement of the head (230) toward the first conveyor; and
(vi) carriage arms (294) depending from said head (230), which carriage arms (294) are operable to grip or otherwise engage with one or more articles from the first conveyor; wherein the first transfer means (283) is releasably engageable with the carriage (212) and operable to drive the carriage (212) around said first substantially semi-circular portion of the fixed track (204);
wherein the first conveying screw (276) is operable to engage with the carriage (212) and to convey the carriage (212), once it has disengaged from the first transfer means (283), around said second substantially linear portion of the fixed track (204) and into a position in which the carriage (212) is engageable with the second transfer means (282);
wherein the second transfer means (282) is operable to drive the carriage (212) around said third substantially semi-circular portion of the fixed track (204);
wherein the second conveying screw (270) is operable to engage with the carriage (212) and to convey the carriage (212), once it has disengaged from the second transfer means (282), around said fourth substantially linear portion of the fixed track (204) and into engagement with the first transfer means (283);
wherein each of the first and second conveying screws (276, 270) comprises a thread for receiving said protrusion (218) of the carriage (212), the thread of each first and second conveying screw (276, 270) follows a path at an angle to a longitudinal axis of the first and second conveying screws (270, 276) respectively, said angle alters at a distance along the length of the first and second conveying screws (270, 276) respectively, so as to effect a change of speed of the carriage (212) when conveyed by the first or second conveying screw (270, 276), whilst a rotation speed of the screw remains constant, wherein each first and second conveying screw (270, 276) is operable to engage with and subsequently convey the carriage (212) before or during disengagement of the carriage (212) from the respective one of the first or second transfer means (283, 282), and to provide an uninterrupted driving force upon the carriage (212) as it moves from one portion of the fixed track (204) to the next;
**characterized in that**,
- the first transfer means (282) is a first conveying wheel (282);
- the second transfer means (283) is a second conveying wheel (283);
- the protrusion (218) of the carriage (212) is a downwardly extending pin (218);
- wherein the first and second conveying screws (276, 270) are operable to convey the carriage (212) along the second and fourth substantially linear portions of the fixed track (204) through rotation about spindles (274, 280) passing through their longitudinal axes;
- wherein peripheral edges of each of the first and second conveying wheels (282, 283) comprise a plurality of protrusions (284) defined therein, which extend sufficiently far outwardly from those peripheral edges for engaging said receiving means (216) of the carriage (212) such that the first and second conveying wheels (282, 283) are thereby operable to drive the carriage (212) around said first and second substantially semi-circular portions of the fixed track (204); and
- wherein the first and second conveying wheels (282, 283) and the first and second conveying screws (270, 276) are all driven by a single common drive means, mechanically linked thereto by mechanical linkages, such that in operation, rotation of the first and second conveying screws (270, 276), in synchronisation with the first and second conveying wheels (282, 283), allows synchronised handover of the carriage between said plurality of protrusions (284) of the first and second conveying wheels (282, 283) and the threads (272, 278) of the first and second conveying screws (270, 276).

## Patentansprüche

1. Vorrichtung (202) zum Fördern eines Wagens (212) um eine festgelegte Bahn (204), wobei die Vorrichtung (202) umfasst:
eine fixe Spur (204) in Form einer Kreisbahn, umfassend: einen zweiten und einen vierten im Wesentlichen linearen Abschnitt der festgelegten Bahn (204), die sich zwischen einem ersten und einem dritten im Wesentlichen halbkreisförmigen Endabschnitt der festgelegten Bahn (204) erstrecken;
erste und zweite Transfereinrichtungen (282, 283), die an den ersten und dritten halbkreisförmigen Endabschnitten der festgelegten Bahn (204) angeordnet sind;
erste und zweite Förderschnecken (276, 270), wobei der zweite und vierte lineare Abschnitt der festgelegten Bahn oberhalb der ersten und zweiten Förderschnecke (270, 276) ausgerichtet sind;
einen ersten Förderer, der neben der festgelegten Bahn (204) angeordnet ist; und
einen zweiten Förderer (290), der längsseits einer anderen Seite der Vorrichtung (202) angeordnet ist;
einen Wagen (212), der beweglich in gleitendem Eingriff mit der festgelegten Bahn (204) steht, wobei der Wagen (212) umfasst:
(i) eine Aufnahmeeinrichtung (216);
(ii) einen Vorsprung (218);
(iii) Führungen (228);
(iv) einen Kopf (230), der mit den Führungen (228) verschiebbar montiert ist;
(v) einen Aktuator, der eine reziproke Bewegung des Kopfes (230) in Richtung des ersten Förderers bereitstellt; und
(vi) Wagenarme (294), die von dem Kopf (230) abhängen, wobei die Wagenarme (294) hergerichtet sind, um einen oder mehrere Artikel von dem ersten Förderer zu greifen oder sonstwie in Eingriff zu nehmen;
wobei die erste Transfereinrichtung (283) lösbar mit dem Wagen (212) in Eingriff genommen werden kann und hergerichtet ist, den Wagen (212) entlang des ersten im Wesentlichen halbkreisförmigen Abschnitts der festgelegten Bahn (204) anzutreiben;
wobei die erste Förderschnecke (276) hergerichtet ist, den Wagen (212), sobald dieser sich von der ersten Transfereinrichtung (283) gelöst hat, in Eingriff zu nehmen und ihn entlang des ersten im Wesentlichen halbkreisförmigen Abschnitt der festgelegten Bahn (204) zu transportieren und in eine Position zu bringen, in der der Wagen (212) mit der zweiten Transfereinrichtung (282) in Eingriff bringbar ist;
wobei die zweite Transfereinrichtung (282) hergerichtet ist, den Wagen (212) entlang des dritten im Wesentlichen halbkreisförmigen Abschnitts der festgelegten Bahn (204) anzutreiben;
wobei die zweite Förderschnecke (270) hergerichtet ist, um mit dem Wagen (212) in Eingriff zu gelangen und den Wagen (212), sobald dieser sich von der zweiten Transfereinrichtung (282) gelöst hat, in Eingriff zu nehmen und ihn entlang des vierten im Wesentlichen linearen Abschnitts der festgelegten Bahn (204) zu transportieren und ihn in Eingriff mit der ersten Transfereinrichtung (283) zu bringen;
wobei die erste und die zweite Förderschnecke (276, 270) jeweils ein Gewinde zur Aufnahme des Vorsprungs (218) des Wagens (212) aufweist, wobei das Gewinde der ersten und der zweiten Förderschnecke (276, 270) jeweils einem Pfad unter einem Winkel folgt, der zu einer Längsachse der ersten bzw. zweiten Förderschnecke (270, 276) angeordnet ist und sich im Abstand entlang der Länge der ersten bzw. zweiten Förderschnecke (270, 276) ändert, um so eine Änderung der Geschwindigkeit des Wagens (212) zu bewirken, wenn dieser von der ersten oder zweiten Förderschnecke (270, 276) transportiert wird, während eine Rotationsgeschwindigkeit der Schnecke konstant bleibt, wobei die erste und die zweite Förderschnecke (276, 270) jeweils hergerichtet sind, um mit dem Wagen (212) in Eingriff zu gelangen und diesen anschließend zu transportieren, bevor er sich von der jeweiligen ersten oder zweiten Transfereinrichtung (283, 282) löst, und um eine ununterbrochene Antriebskraft auf den Wagen (212) aufzubringen, wenn er sich von einem Abschnitt der festgelegten Bahn (204) zu dem nächsten Abschnitt bewegt;
**dadurch gekennzeichnet, dass**
- die erste Transfereinrichtung (282) ein erstes Förderrad (282) ist;
- die zweite Transfereinrichtung (283) ein zweites Förderrad (283) ist;
- der Vorsprung (218) des Wagens (212) ein sich nach unten erstreckender Stift (218) ist;
- wobei die erste und die zweite Förderschnecke (276, 270) hergerichtet sind, um den Wagen (212) entlang des zweiten und des vierten im Wesentlichen linearen Abschnitts der festgelegten Bahn (204) zu transportieren, und zwar durch Rotation um Spindeln (274, 280), die durch deren Längsachsen verlaufen;
- wobei Umfangskanten des ersten und des zweiten Förderrads (282, 283) jeweils eine Vielzahl darin definierter Vorsprünge (284) aufweisen, die sich von den Umfangskanten hinreichend weit nach außen erstrecken, um mit der Aufnahmeeinrichtung (216) des Wagens (212) in Eingriff zu gelangen, derart, dass das erste und das zweite Förderrad (282, 283) dadurch wirkfähig sind, um den Wagen (212) entlang der ersten und zweiten im Wesentlichen halbkreisförmigen Abschnitte der festgelegten Bahn (204) anzutreiben; und
wobei das erste und das zweite Förderrad (282, 283) und die erste und die zweite Förderschnecke (270, 276) von einer einzigen gemeinsamen Antriebseinrichtung angetrieben werden, die mit diesen durch mechanische Verbindungen derart verbunden ist, dass im Betrieb eine Rotation der ersten und der zweiten Förderschnecke (270, 276), und zwar synchron mit einer Rotation des ersten und des zweiten Förderrads (282, 283) es ermöglicht, dass eine synchrone Übergabe des Wagens zwischen der Vielzahl von Vorsprüngen (284) der ersten und zweiten Förderräder (282, 283) und den Gewinden (272, 278) der ersten und zweiten Förderschnecken (270, 276) erfolgt.

## Revendications

1. Dispositif (202) pour convoyer un chariot (212) autour d'un trajet fixe (204), lequel dispositif (202) comprend :
une piste fixe (204) sous la forme d'un circuit comprenant : des seconde et quatrième parties sensiblement linéaires de la piste fixe (204) s'étendant entre des première et troisième parties d'extrémité sensiblement semi-circulaires de la piste fixe (204) ;
des premier et second moyens de transfert (282, 283) au niveau desdites première et troisième parties d'extrémité semi-circulaires de la piste fixe (204) ;
des première et seconde vis de convoyage (276, 270), lesdites seconde et quatrième parties linéaires de la piste fixe étant alignées sur les première et seconde vis de convoyage (270, 276) ;
un premier convoyeur disposé à côté de ladite piste fixe (204) ; et
un second convoyeur (290) disposé le long d'un autre côté du dispositif (202) ;
un chariot (212) en prise de manière mobile dans une prise coulissante avec la piste fixe (204), le chariot (212) comprenant :
(i) des moyens de réception (216) ;
(ii) une saillie (218) ;
(iii) des guides (228) ;
(iv) une tête (230) qui est montée de manière coulissante avec les guides (228) ;
(v) un actionneur qui permet un mouvement d'aller et retour de la tête (230) vers le premier convoyeur ; et
(vi) des bras de chariot (294) pendant depuis ladite tête (230), lesquels bras de chariot (294) peuvent fonctionner pour agripper ou venir en prise d'une autre manière avec un ou plusieurs articles venant du premier convoyeur ; dans lequel les premiers moyens de transfert (283) peuvent venir en prise de manière amovible avec le chariot (212) et peuvent fonctionner pour entraîner le chariot (212) autour de ladite première partie sensiblement semi-circulaire de la piste fixe (204) ;
dans lequel la première vis de convoyage (276) peut fonctionner pour venir en prise avec le chariot (212) et pour convoyer le chariot (212), une fois qu'il est venu hors de prise des premiers moyens de transfert (283), autour de ladite seconde partie sensiblement linéaire de la piste fixe (204) et dans une position dans laquelle le chariot (212) peut venir en prise avec les seconds moyens de transfert (282) ;
dans lequel les seconds moyens de transfert (282) peuvent fonctionner pour entraîner le chariot (212) autour de ladite troisième partie sensiblement semi-circulaire de la piste fixe (204) ;
dans lequel la seconde vis de convoyage (270) peut fonctionner pour venir en prise avec le chariot (212) et pour convoyer le chariot (212), une fois qu'il est venu hors de prise des seconds moyens de transfert (282), autour de la quatrième partie sensiblement linéaire de la piste fixe (204) et en prise avec les premiers moyens de transfert (283) ;
dans lequel chacune des première et seconde vis de convoyage (276, 270) suit un trajet à un angle par rapport à un axe longitudinal des première et seconde vis de convoyage (270, 276) respectivement, ledit angle se modifie à une distance le long de la longueur des première et seconde vis de convoyage (270, 276) respectivement, de façon à effectuer un changement de vitesse du chariot (212) quand il est convoyé par les première et seconde vis de convoyage (270, 276), alors qu'une vitesse de rotation de la vis reste constante, dans lequel chaque première et seconde vis de convoyage (276, 270) peut fonctionner pour venir en prise avec et convoyer ensuite le chariot (212) avant ou pendant la venue hors de prise du chariot (212) de l'un respectif des premier ou second moyens de transferts (283, 282), et pour fournir une force d'entraînement ininterrompue sur le chariot (212) quand il se déplace d'une partie de la piste fixe (204) vers la prochaine ;
**caractérisé en ce que**,
les premiers moyens de transfert (282) sont une première roue de convoyage (282) ;
les seconds moyens de transfert (283) sont une seconde roue de convoyage (283) ;
la saillie (218) du chariot (212) est un axe s'étendant vers le bas (218) ;
dans lequel les première et seconde vis de convoyage (276, 270) peuvent fonctionner pour convoyer le chariot (212) le long des seconde et quatrième parties sensiblement linéaires de la piste fixe (204) par la rotation autour de broches (274, 280) passant à travers leurs axes longitudinaux ;
dans lequel des bords périphériques de chacune des première et seconde roues de convoyage (282, 283) comprennent une pluralité de saillies (284) définies dedans, qui s'étendant suffisamment loin vers l'extérieur depuis ces bords périphériques pour venir en prise avec lesdits moyens de réception (216) du chariot (212) de telle manière que les première et seconde roues de convoyage (282, 283) peuvent ainsi fonctionner pour entraîner le chariot (212) autour desdites première et seconde parties sensiblement semi-circulaires de la piste fixe (204) ; et
dans lequel les première et seconde roues de convoyage (282, 283) et les première et seconde vis de convoyage (270, 276) sont toutes entrainées par un seul moyen d'entraînement commun, lié mécaniquement à elles par des biellettes mécaniques, de telle manière qu'en fonctionnement, la rotation des première et seconde vis de convoyage (270, 276), en synchronisation avec les première et seconde roues de convoyage (282, 283), permet un contrôle synchronisé du chariot entre ladite pluralité de saillies (284) des première et seconde roues de convoyage (282, 283) et les filets (272, 278) des première et seconde vis de convoyage (270, 276).
